# DEMANDE DE BREVET EUROPEEN

(11) **EP 1 541 413 A1**
(43) Date de publication de la demande: **15.06.2005**
(21) Numéro de dépôt: 04364073.9
(22) Date de dépôt: 02.12.2004
(51) Int. Cl.: B60P 3/34

(54) **Véhicule, tel que notamment un camping-car, dont un compartiment arrière est équipé de moyens d'extension**

(30) Priorité: 08.12.2003 FR 0314348
(71) Demandeur: Etablissements Glemée, 35590 Saint-Gilles (FR)
(72) Inventeur: Glémée, André, 35590 Saint-Gilles (FR)
(74) Mandataire: Larcher, Dominique

(57) **Abrégé**

L'invention a pour objet un véhicule de tourisme de grandes dimensions, tel que notamment un camping-car, comprenant un compartiment arrière (2) formant un espace à vivre et des moyens d'extension dudit compartiment arrière, caractérisé en ce que lesdits moyens d'extension comprennent des premiers moyens d'extension dudit compartiment arrière (2) selon une direction sensiblement horizontale et des deuxièmes moyens d'extension desdits premiers moyens d'extension selon une direction sensiblement verticale.

## Description

L'invention concerne le domaine des véhicules de tourisme. Plus précisément, l'invention concerne les véhicules de tourisme de grandes dimensions, tels que les camping-cars ou similaires.

Le marché des camping-cars s'est considérablement développé depuis plusieurs années, notamment en raison :
- de la combinaison avantageuse de la mobilité et de l'habitabilité ;
- des possibilités de séjourner pour des durées très variables en des lieux divers et variés.

Face à la demande croissante pour ce type de véhicules, les constructeurs ont été amenés à élargir leur gamme de produits. Aussi, les camping-cars présentent des caractéristiques relativement variables en termes :
- d'esthétisme ;
- de confort ;
- de motorisation ;
- de capacité d'accueil (en nombre de personnes susceptibles d'être logées) ;
- d'espace de vie.

Or, il est évident que les dimensions du véhicule influent énormément sur les deux dernières caractéristiques (capacité d'accueil et espace de vie).

Bien entendu, il est possible de concevoir des camping-cars avec des dimensions de plus en plus importantes en vue de proposer davantage de volumes intérieurs.

A cet effet, certains constructeurs proposent des camping-cars dont la longueur peut atteindre 8 mètres, 9 mètres, et même 12 mètres.

Toutefois, cette escalade aux dimensions des camping-cars est nécessairement limitée.

En effet, certaines limites s'imposent aux constructeurs, notamment pour des raisons d'homologation (liées à l'encombrement sur les routes) et/ou à la maniabilité des véhicules.

Il n'en reste pas moins que certains adeptes du tourisme en camping-car sont demandeurs de véhicules de plus en plus grands.

Une solution a été proposée par l'art antérieur pour tenter de répondre à cette attente.

Selon cette solution, un véhicule présentant des dimensions classiques peut être étendu en partie lors d'un stationnement. Pour cela, le compartiment arrière (formant l'espace à vivre) est équipé d'une extension prévue pour être déployée horizontalement dans le prolongement d'un lit pour loger par exemple la tête de ce lit.

Une telle extension apparaît clairement d'usage spécifique et présente par conséquent un intérêt limité.

En tout état de cause, une telle extension ne permet pas d'étendre notablement l'espace à vivre du compartiment arrière.

L'invention a donc notamment pour objectif de pallier les inconvénients de l'art antérieur.

Plus précisément, l'invention a pour objectif de proposer une technique qui permette de proposer des véhicules de tourisme tels que des camping-cars avec un compartiment arrière de dimensions classiques, pouvant être notablement étendues en phase stationnement.

L'invention a également pour objectif de fournir un tel véhicule de tourisme dont le compartiment arrière peut être étendu à des fins diverses et variées.

L'invention a aussi pour objectif de fournir un tel véhicule de tourisme dont le compartiment arrière peut être étendu simplement et rapidement.

L'invention a encore pour objectif de fournir un tel véhicule de tourisme qui soit simple de conception et qui puisse être monté aisément.

Un autre objectif de l'invention est de fournir un tel véhicule de tourisme qui présente un esthétisme général satisfaisant.

Ces objectifs, ainsi que d'autres qui apparaîtront par la suite, sont atteints grâce à l'invention qui a pour objet un véhicule de tourisme de grandes dimensions, tel que notamment un camping-car, comprenant un compartiment arrière formant un espace à vivre et des moyens d'extension dudit compartiment arrière, lesdits moyens d'extension comprenant des premiers moyens d'extension dudit compartiment arrière selon une direction sensiblement horizontale et des deuxièmes moyens d'extension desdits premiers moyens d'extension selon une direction sensiblement verticale.

L'invention permet donc d'étendre notablement les dimensions du compartiment arrière. En d'autres termes, il est possible d'augmenter l'espace de vie du compartiment arrière grâce à la combinaison des moyens d'extension prévus selon l'invention.

En effet, les moyens d'extension dans un plan horizontal et dans un plan vertical permettent d'ajouter au compartiment arrière un volume pouvant constituer un véritable prolongement du compartiment arrière (c'est-à-dire présentant une section selon l'axe transversal du véhicule approximativement égal à la section transversale du compartiment arrière).

Bien entendu, une autre façon d'augmenter le volume du compartiment arrière pourrait consister par exemple en une extension dont un panneau coïnciderait avec le panneau d'extrémité du compartiment arrière, et qui serait déployée à partir de ce dernier.

Une telle technique présenterait toutefois des limites quant aux dimensions, soit en profondeur soit en hauteur, de l'extension, ceci en raison de l'architecture de la caisse du véhicule qui présente de nombreux obstacles (passage des roues, essieux, réservoir d'essence...) pour la mise en oeuvre d'une telle extension.

Les moyens d'extension en hauteur selon l'invention permettent donc un « étirement » du compartiment arrière en contournant les difficultés, voire les impossibilités du type de solution tel que celui mentionné précédemment.

Bien au contraire, il est aisé grâce à l'invention de loger dans un espace limité du compartiment arrière une extension que l'on extrait de celui-ci longitudinalement ou transversalement et que l'on peut déployer sur une hauteur équivalente, voire supérieure à celle du compartiment arrière.

En outre, on comprend que l'extension peut être déployée selon une hauteur variable en fonction de l'utilisation envisagée.

Selon une solution avantageuse, lesdits premiers moyens d'extension comprennent une première cellule mobile entre au moins deux positions :
- une position escamotée à l'intérieur dudit compartiment arrière ;
- une position déployée à l'extérieur dudit compartiment arrière.

On obtient ainsi une sorte de caisson constituant une première partie de l'extension, pouvant être logé intégralement à l'intérieur du compartiment arrière, sans nuire à l'esthétisme extérieur de celui-ci.

Selon un mode de réalisation préféré, ladite première cellule est montée coulissante sur ledit compartiment arrière.

On peut ainsi envisager une structure rigide pour la cellule correspondante.

Selon un deuxième mode de réalisation envisageable, ladite première cellule est reliée audit compartiment arrière par des parois déployables et/ou est constituée par des parois déployables.

Ceci peut permettre d'obtenir des gains de poids en comparaison à une structure rigide.

Préférentiellement, lesdits premiers moyens d'extension comprennent des premiers moyens d'entraînement de ladite cellule selon l'axe longitudinal dudit véhicule.

Selon une variante envisageable, lesdits premiers moyens d'extension comprennent des premiers moyens d'entraînement de ladite cellule selon l'axe transversal dudit véhicule.

Dans l'un ou l'autre cas, le déploiement de la première cellule à partir du compartiment arrière, ou le reclassement de celle-ci à l'intérieur du compartiment arrière, peut être obtenu facilement et rapidement grâce aux moyens d'entraînement correspondants.

Bien entendu, il est toutefois envisageable, selon un autre mode de réalisation, que le déploiement de la première cellule soit effectué manuellement.

Selon une solution préférée, lesdits deuxièmes moyens d'extension comprennent au moins une deuxième cellule montée mobile sur ladite première cellule entre au moins deux positions :
- une position escamotée à l'intérieur de ladite première cellule ;
- une position déployée à l'extérieur de ladite première cellule.

Il apparaît donc clairement que l'ensemble des moyens d'extension peut de cette façon être logé dans un espace réduit correspondant sensiblement au volume de la première cellule (à l'exception d'éventuels moyens de guidage particuliers prévus dans le compartiment arrière).

Selon une solution préférée, ladite deuxième cellule est montée coulissante sur ladite première cellule.

Une telle caractéristique permet la mise en oeuvre d'une structure rigide pour la deuxième cellule.

Selon une autre solution envisageable, ladite deuxième cellule est reliée à ladite première cellule par des parois déployables et/ou est constituée par des parois déployables.

Comme pour la première cellule, un tel agencement peut permettre d'obtenir des gains de poids.

Dans l'un ou l'autre cas, ladite première cellule et/ou ladite deuxième cellule sont préférentiellement dimensionnées de façon à pouvoir s'étendre à partir dudit compartiment arrière jusqu'au sol.

On peut de cette façon envisager diverses utilisations de l'extension, soit en tant que pièce à vivre communiquant ou pas avec le compartiment arrière, soit en tant que garage.

Selon une variante envisageable, ladite deuxième cellule comprend des moyens d'appui au sol amovibles.

Avantageusement, lesdits deuxièmes moyens d'extension comprennent des deuxièmes moyens d'entraînement du déplacement de ladite deuxième cellule par rapport à ladite première cellule.

On note que, de façon similaire à la première cellule, le déploiement de la deuxième cellule peut être effectué manuellement selon un autre mode de réalisation envisageable.

Selon un mode de réalisation particulier, lesdits premiers et/ou deuxièmes moyens d'entraînement comprennent l'un au moins des moyens appartenant au groupe suivant :
- vérin pneumatique ;
- vérin électrique ;
- crémaillère ;
- câble.

D'autres caractéristiques et avantages de l'invention apparaîtront plus clairement à la lecture de la description suivante d'un mode de réalisation préférentiel de l'invention, et de certaines de ses variantes, donnés à titre d'exemples illustratifs et non limitatifs, et des dessins annexés parmi lesquels :
- la figure 1 est une vue d'un camping-car équipé d'une extension selon l'invention, l'extension étant en position escamotée ;
- la figure 2 est une vue d'un camping-car équipé d'une extension selon l'invention, l'extension apparaissant dans une phase de déploiement intermédiaire ;
- la figure 3 est une vue d'un camping-car équipé d'une extension selon l'invention, l'extension apparaissant dans une phase de déploiement finale.

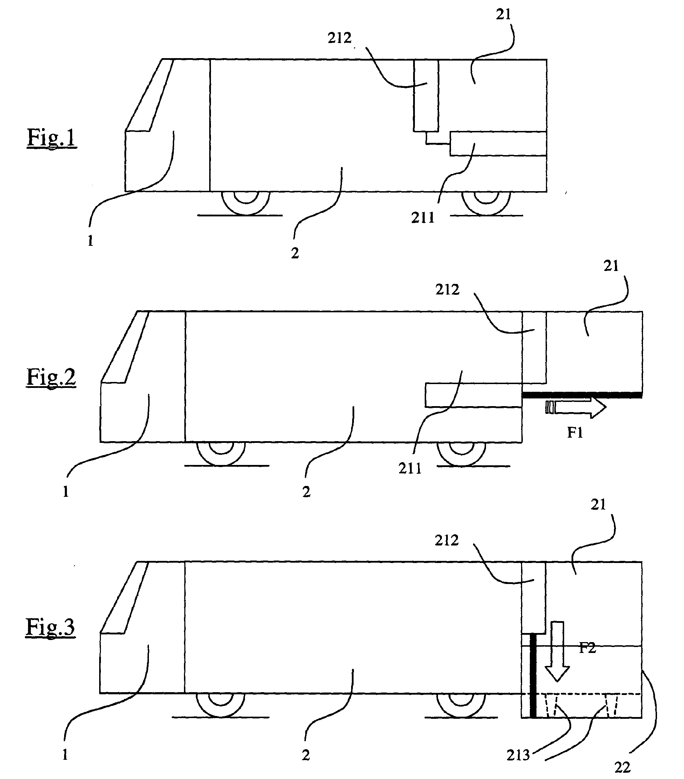

En référence à la figure 1, un camping-car comprend classiquement un compartiment arrière 2 associé à une cabine 1. Sur le marché, on distingue les camping-cars à cellule (constitués d'un ensemble châssis cabine sur lequel est rapportée une cellule habitable) et les camping-cars intégraux (composés d'un châssis nu entièrement carrossé). L'invention s'applique indifféremment à ces deux types de véhicules.

Selon le principe de l'invention, le compartiment arrière du camping-car peut être étendu selon sa largeur ou sa longueur d'une part, grâce à une première extension qui peut elle-même être étendue verticalement, en particulier en direction du sol.

Selon le présent mode de réalisation de l'invention, le compartiment arrière 2 est équipé d'une cellule 21 couplée à un vérin 211 (ou, selon d'autres modes de réalisation envisageables, par tout autre moyen d'entraînement approprié tel que notamment un système à crémaillère ou à câble) susceptible de déplacer la cellule 21, à partir d'une position escamotée (figure 1) vers l'extérieur du compartiment 2 tel qu'illustré par la flèche F1 sur la figure 2.

Pour ce faire, la cellule 21 est montée coulissante à l'intérieur du compartiment 2 à l'aide de tout moyen de guidage approprié.

On note que le déploiement de la cellule 21 s'effectue longitudinalement tel qu'illustré par la figure 2, mais pourrait de façon similaire être effectué selon l'axe transversal du véhicule.

A partir de la position illustrée par la figure 2, une deuxième cellule 22 est déployée à partir de la cellule 21 à l'intérieur de laquelle la cellule 2 peut être complètement escamotée.

Pour cela, la cellule 22 est montée coulissante sur la cellule 21 et est entraînée par un vérin 212 (ou par tout autre moyen d'entraînement approprié tels que ceux indiqués précédemment en référence à la cellule 21), tel qu'illustré par la flèche F2 sur la figure 3.

Selon un autre mode de réalisation envisageable, la cellule 21 pourrait être reliée au compartiment 2 par des parois souples à soufflets (ou autres parois déployables en accordéon), ainsi que la cellule 22 par rapport à la cellule 21. Il est également envisageable que les cellules 21 et 22 soient constituées elles-mêmes par des parois souples.

Selon un mode de réalisation préféré, les cellules 21 et 22 présentent des dimensions telles que la base de la cellule 22 puisse reposer directement sur le sol.

Selon un autre mode de réalisation envisageable, la base de la cellule 22 ne repose pas directement sur le sol et est en appui sur le sol par l'intermédiaire de pieds amovibles 213.

A titre indicatif, pour un camping-car d'une longueur de 12 mètres et de 2,40 mètres, l'extension proposée selon la présente invention pourra présenter une longueur de 4,50 m, voire plus, et une hauteur de 1,92, sur deux niveaux.

## Revendications

1. Véhicule de tourisme de grandes dimensions, tel que notamment un camping-car, comprenant un compartiment arrière (2) formant un espace à vivre et des moyens d'extension dudit compartiment arrière,
**caractérisé en ce que** lesdits moyens d'extension comprennent des premiers moyens d'extension dudit compartiment arrière (2) selon une direction sensiblement horizontale et des deuxièmes moyens d'extension desdits premiers moyens d'extension selon une direction sensiblement verticale.

2. Véhicule de tourisme de grandes dimensions selon la revendication 1, **caractérisé en ce que** lesdits premiers moyens d'extension comprennent une première cellule (21) mobile entre au moins deux positions :
- une position escamotée à l'intérieur dudit compartiment arrière (2) ;
- une position déployée à l'extérieur dudit compartiment arrière (2).

3. Véhicule de tourisme de grandes dimensions selon la revendication 2, **caractérisé en ce que** ladite première cellule (21) est montée coulissante sur ledit compartiment arrière (2).

4. Véhicule de tourisme de grandes dimensions selon la revendication 2, **caractérisé en ce que** ladite première cellule (21) est reliée audit compartiment arrière (2) par des parois déployables et/ou est constituée par des parois déployables.

5. Véhicule de tourisme de grandes dimensions selon l'une des revendications 3 et 4, **caractérisé en ce que** lesdits premiers moyens d'extension comprennent des premiers moyens d'entraînement (211) de ladite cellule (21) selon l'axe longitudinal dudit véhicule.

6. Véhicule de tourisme de grandes dimensions selon l'une des revendications 3 et 4, **caractérisé en ce que** lesdits premiers moyens d'extension comprennent des premiers moyens d'entraînement de ladite cellule (21) selon l'axe transversal dudit véhicule.

7. Véhicule de tourisme de grandes dimensions selon l'une quelconque des revendications 2 à 6, **caractérisé en ce que** lesdits deuxièmes moyens d'extension comprennent au moins une deuxième cellule (22) montée mobile sur ladite première cellule (21) entre au moins deux positions :
- une position escamotée à l'intérieur de ladite première cellule (21) ;
- une position déployée à l'extérieur de ladite première cellule (21).

8. Véhicule de tourisme de grandes dimensions selon la revendication 7, **caractérisé en ce que** ladite deuxième cellule (22) est montée coulissante sur ladite première cellule (21).

9. Véhicule de tourisme de grandes dimensions selon la revendication 7, **caractérisé en ce que** ladite deuxième cellule (22) est reliée à ladite première cellule (21) par des parois déployables et/ou est constituée par des parois déployables.

10. Véhicule de tourisme de grandes dimensions selon l'une quelconque des revendications 7 à 9, **caractérisé en ce que** ladite première cellule (21) et/ou ladite deuxième cellule (22) sont dimensionnées de façon à pouvoir s'étendre à partir dudit compartiment arrière (2) jusqu'au sol.

11. Véhicule de tourisme de grandes dimensions selon l'une quelconque des revendications 7 à 9, **caractérisé en ce que** ladite deuxième cellule (22) comprend des moyens d'appui (213) au sol amovibles.

12. Véhicule de tourisme de grandes dimensions selon l'une quelconque des revendications 7 à 11, **caractérisé en ce que** lesdits deuxièmes moyens d'extension comprennent des deuxièmes moyens d'entraînement (212) du déplacement de ladite deuxième cellule (22) par rapport à ladite première cellule (21).

13. Véhicule de tourisme de grandes dimensions selon l'une des revendications 2 et 12, **caractérisé en ce que** lesdits premiers et/ou deuxièmes moyens d'entraînement (211), (212) comprennent l'un au moins des moyens appartenant au groupe suivant :
- vérin pneumatique ;
- vérin électrique ;
- crémaillère ;
- câble.
